# DEMANDE DE BREVET EUROPEEN

(11) **EP 1 443 796 A1**
(43) Date de publication de la demande: **04.08.2004**
(21) Numéro de dépôt: 04290213.0
(22) Date de dépôt: 27.01.2004
(51) Int. Cl.: H04Q 7/38

(54) **Procédé pour l'accès simultané à des services circuit et à des services paquet dans un système cellulaire de radiocommunications mobiles**

(30) Priorité: 29.01.2003 FR 0301018
(71) Demandeur: Evolium S.A.S., 75008 Paris (FR)
(72) Inventeur: Blanc, Patrick, 92130 Issy Les Moulineaux (FR); Bourdeaut, Stanislas, 75015 Paris (FR); Drevon, Nicolas, 75016 Paris (FR)
(74) Mandataire: El Manouni, Josiane

(57) **Abrégé**

Procédé pour l'accès simultané à des services circuit et à des services paquet, dans un système cellulaire de radiocommunications mobiles comportant des cellules de deuxième génération et des cellules de troisième génération, procédé dans lequel, dans le cas où une connexion paquet, respectivement circuit, est requise pour un terminal ayant une connexion circuit, respectivement paquet, établie dans une cellule de deuxième génération, il est déterminé si un changement de cellule vers une cellule de troisième génération est possible, et si oui ledit changement de cellule est effectué, afin de permettre lesdites connexions circuit et paquet simultanément dans une cellule de troisième génération.

## Description

La présente invention concerne d'une manière générale les systèmes de radiocommunications mobiles.

D'une manière générale, les systèmes de radiocommunications mobiles font l'objet de normalisation, et pour plus d'informations on pourra se reporter aux normes correspondantes, publiées par les organismes de normalisation correspondants.

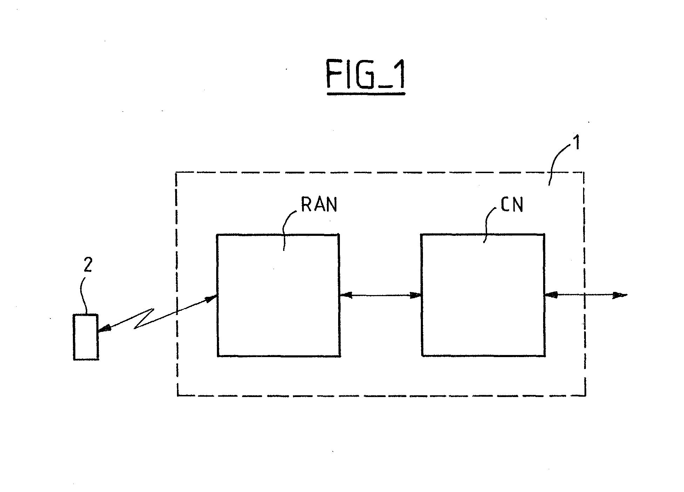

L'architecture générale d'un tel système est rappelée brièvement en relation avec la figure 1. Un tel système comporte un réseau de radiocommunications mobiles 1 communiquant avec des terminaux mobiles 2 et avec des réseaux extérieurs (non illustrés spécifiquement). Le réseau 1 comporte lui-même un réseau d'accès radio 3 (ou RAN, pour « Radio Access Network ») chargé principalement de la transmission et de la gestion des ressources radio sur l'interface radio entre le réseau et les terminaux mobiles, et un réseau coeur 4 (ou CN, pour « Core Network ») chargé principalement du routage et de la gestion des communications. Ces systèmes ont en outre une architecture cellulaire, et des mécanismes sont en outre prévus, permettant de choisir en permanence, pour chaque terminal, une meilleure cellule serveuse via laquelle accéder au réseau.

Les évolutions des besoins et de la technologie conduisent généralement à distinguer différents types de services, notamment des services circuit et des services paquet, et différents types de systèmes, notamment des systèmes de deuxième génération et des systèmes de troisième génération.

Un exemple typique de système de deuxième génération est le GSM (« Global System for Mobile communication »), utilisant une technologie d'accès radio de type FDMA/TDMA (« Frequency Division Multiple Access / Time Division Multiple Access »). Initialement, le GSM était essentiellement destiné à fournir des services de type téléphonie, au moyen de technologie de réseau coeur basée sur la commutation de circuit (ou CS pour « Circuit-Switched » en anglais) et de protocoles adaptés au cas de trafic de type circuit. Des services paquet ont ensuite été introduits, grâce à la fonctionnalité GPRS (« Général packet Radio Service ») utilisant une technologie de réseau coeur basée sur la commutation de paquet (ou PS pour « Packet-Switched » en anglais) et des protocoles spécifiques adaptés au cas de trafic de type paquet.

Cependant, les systèmes de deuxième génération ne sont pas optimisés pour supporter simultanément une connexion circuit et une connexion paquet, pour un même terminal.

Notamment, il n'est pas nécessairement possible, pour un utilisateur engagé dans une connexion circuit (par exemple pour un appel téléphonique) d'initier une connexion paquet (par exemple pour un accès à Internet), ou inversement. Seuls certains terminaux, plus complexes et plus coûteux, tels que des terminaux dits de classe A, ou encore des terminaux DTM supportant la fonctionnalité DTM (« Dual Transfer Mode »), sont ainsi capables de supporter simultanément des services circuit et des services paquet. De même, seules certaines cellules, telles que notamment des cellules DTM supportant la fonctionnalité DTM, sont ainsi capables de supporter simultanément des services circuit et des services paquet, notamment car ceci requiert une coordination d'allocation de ressources pour une connexion circuit et pour une connexion paquet, pour un même terminal, qui n'est pas nécessairement disponible dans toutes les implémentations.

Ainsi, actuellement, dans un système de type GSM-GPRS :
- un utilisateur ayant un terminal autre qu'un terminal de classe A ou DTM, et engagé dans une connexion circuit, doit mettre fin à cette connexion circuit pour pouvoir initier une connexion paquet,
- un utilisateur ayant un terminal autre qu'un terminal de classe A ou DTM, et engagé dans une connexion paquet, doit suspendre la session paquet pour pouvoir initier une connexion circuit, puis il doit attendre la fin de cette connexion circuit pour pouvoir reprendre la session paquet; en outre, même si cet utilisateur a un terminal DTM (et s'il accède au réseau via une cellule DTM) il doit attendre que la connexion circuit soit établie pour pouvoir reprendre la session paquet.

A l'inverse, les systèmes de troisième génération ont, dès leur conception, été optimisés pour permettre un multiplexage de différents services, notamment des services circuit et des services paquet, sur une même connexion.

Un exemple typique de système de troisième génération est l'UMTS (« Universal Mobile Télécommunication System »), utilisant une technologie d'accès radio de type W-CDMA (« Wideband - Code Division Multiple Access »). L'UMTS utilise les deux technologies de réseau coeur (commutation de circuit et commutation de paquet), et des protocoles adaptés à la fois au cas de trafic de type circuit et de de type paquet.

Ainsi, dans un système de troisième génération tel que notamment l'UMTS, il est toujours possible, pour un utilisateur engagé dans une connexion circuit, d'initier une connexion paquet, ou inversement.

Par ailleurs, au moins dans leur phase initiale de déploiement, les réseaux de troisième génération vont s'appuyer sur des infrastructures existantes de deuxième génération. En d'autres termes un même système peut alors comporter des cellules de deuxième génération (notamment GSM-GPRS) et des cellules de troisième génération (notamment UMTS). Dans ce contexte il devient intéressant, pour un terminal mobile, d'être bi-mode 2G/3G, notamment bi-mode UMTS/GSM-GPRS. Ceci permet notamment, pour des services supportés en commun par ces deux générations, tels que notamment des services de type téléphonie, d'étendre la couverture d'un réseau de troisième génération, en bénéficiant de la couverture existante fournie par un réseau de deuxième génération.

Ainsi que l'a observé le demandeur, un nouveau problème se pose alors, qui est que, avec un terminal bi-mode 2G/3G (tel que notamment un terminal UMTS/GSM-GPRS) l'utilisateur risque de ne pas obtenir la même qualité de service, suivant que la cellule via laquelle il accède au système est une cellule 3G (notamment UMTS) ou une cellule 2G (notamment GSM-GPRS). En effet, comme rappelé précédemment, une cellule 3G supporte nécessairement simultanément des services circuit et des services paquet, alors qu'une cellule 2G ne supporte pas nécessairement simultanément ces deux types de services.

Ainsi, si le terminal et/ou la cellule 2G via laquelle le terminal accède au réseau ne supportent pas simultanément des services circuit et des services paquet, l'utilisateur devra attendre que sa connexion circuit soit terminée avant de pouvoir initier une connexion paquet. Ceci risque en outre de se produire relativement couramment, puisque certains opérateurs pourront décider que des connexions circuit seront automatiquement établies via des cellules GSM/GPRS.

De même, si le terminal et/ou la cellule 2G via laquelle le terminal accède au réseau ne supportent pas simultanément des services circuit et des services paquet, l'utilisateur devra attendre que sa connexion paquet soit terminée ou devra l'interrompre avant de pouvoir initier une connexion circuit. De plus, même dans le cas où la fonctionnalité DTM est supportée, l'utilisateur doit, pour initier une connexion circuit alors qu'une session paquet est en cours, commencer par suspendre la session paquet, qui ne pourra être reprise que lorsque la connexion circuit sera établie.

Une telle dégradation de qualité de service risque de ne pas être très appréciée et/ou acceptée par les utilisateurs, d'autant plus que ceci risque de se produire sans qu'ils soient préalablement consultés (comme ce serait le cas par exemple dans le cas de couverture UMTS restreinte) et sans ajustement de taxation.

La présente invention a notamment pour but de résoudre ce type de problème, et d'éviter tout ou partie des inconvénients mentionnés précédemment. Plus généralement, la présente invention a pour but d'améliorer la qualité de service, en l'occurrence l'accessibilité aux services, dans ces systèmes.

Un des objets de la présente invention est un procédé pour l'accès simultané à des services circuit et à des services paquet, dans un système cellulaire de radiocommunications mobiles comportant des cellules de deuxième génération et des cellules de troisième génération, procédé dans lequel, dans le cas où une connexion paquet, respectivement circuit, est requise pour un terminal ayant une connexion circuit, respectivement paquet, établie dans une cellule de deuxième génération, il est déterminé si un changement de cellule vers une cellule de troisième génération est possible, et si oui ledit changement de cellule est effectué, afin de permettre lesdites connexions circuit et paquet simultanément dans une cellule de troisième génération.

Suivant une autre caractéristique, le réseau détermine si ledit changement de cellule est possible.

Suivant une autre caractéristique, dans le cas où ladite connexion établie dans une cellule de deuxième génération est une connexion circuit, ledit changement de cellule correspond à un transfert inter-cellulaire ou « handover ».

Suivant une autre caractéristique, dans le cas où ladite connexion établie dans une cellule de deuxième génération est une connexion paquet, ledit changement de cellule correspond à un changement de cellule ordonné par le réseau.

Suivant une autre caractéristique, le terminal signale au réseau qu'une connexion paquet, respectivement circuit, est requise simultanément à une connexion circuit, respectivement paquet, déjà établie, et, sur réception de ladite signalisation, le réseau détermine si ledit changement de cellule est possible.

Suivant une autre caractéristique, le terminal signale au réseau qu'une connexion paquet est requise simultanément à une connexion circuit déjà établie, en transmettant au réseau une requête de fonctionnement selon le mode DTM (« Dual Transfer Mode »).

Suivant une autre caractéristique :
- une cellule de deuxième génération ne supportant simultanément des services circuit et des services paquet signale faussement aux terminaux mobiles dans cette cellule qu'elle supporte simultanément des services circuit et des services paquet,
- un terminal mobile supportant simultanément des services circuit et des services paquet, et ayant une connexion circuit établie dans cette cellule, signale au réseau qu'une connexion paquet est requise, en transmettant au réseau une requête de fonctionnement selon le mode DTM (« Dual Transfer Mode »),
- sur réception de ladite signalisation, le réseau détermine si ledit changement de cellule est possible.

Suivant une autre caractéristique, le terminal signale au réseau qu'une connexion circuit est requise simultanément à une connexion paquet déjà établie, en transmettant au réseau une requête de suspension de session paquet.

Suivant une autre caractéristique, une fois ledit changement de cellule effectué, un établissement de connexion dans ladite cellule de troisième génération est initié automatiquement par l'envoi au terminal, par le réseau, d'un message de « paging ».

Suivant une autre caractéristique, lors de l'exécution dudit changement de cellule, des informations nécessaires pour une telle initiation automatique d'établissement de connexion par le réseau sont transmises par ladite cellule de deuxième génération vers ladite cellule de troisième génération.

Suivant une autre caractéristique, une fois ledit changement de cellule effectué, un établissement de connexion dans ladite cellule de troisième génération est initié par le terminal.

Un autre objet de la présente invention est un terminal mobile pour système de radiocommunications mobiles, comportant des moyens pour mettre en oeuvre un tel procédé.

Un autre objet de la présente invention est un équipement de réseau d'accès radio pour système de radiocommunications mobiles, comportant des moyens pour mettre en oeuvre un tel procédé.

Un autre objet de la présente invention est un équipement de réseau coeur pour système de radiocommunications mobiles, comportant des moyens pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:
- la figure 1 rappelle l'architecture générale d'un système de radiocommunications mobiles,
- les figures 2, 3, 4, 5 sont destinées à illustrer, respectivement, un premier, un deuxième, un troisième, et un quatrième exemple de procédé suivant l'invention.

En complément des rappels faits précédemment en relation avec la figure 1, on rappelle que:
- dans un système de type GSM/GPRS, le terminal mobile est appelé MS (« Mobile Station »), le réseau d'accès radio (ou RAN) est composé de sous-ensembles appelés BSS (« Base Station Subsystem »), et le réseau coeur (ou CN) comporte notamment, pour le domaine lié à la commutation de circuit (ou « CS Domain » en anglais), des éléments de réseau de type 2G-MSC ( où 2G est utilisé pour « 2^{nd} Génération » et MSC est utilisé pour « Mobile Switching center ») et, pour le domaine lié à la commutation de paquet (ou « PS Domain » en anglais), des éléments de réseau de type 2G-SGSN ( où 2G est utilisé pour « 2^{nd} Génération » et SGSN est utilisé pour «Serving GPRS Support Node »),
- dans un système de type UMTS, le terminal mobile est appelé UE (« User Equipment »), le réseau d'accès radio (ou RAN) est appelés UTRAN (« UMTS Terrestrial Radio Access Network »), et le réseau coeur (ou CN) comporte notamment, pour le domaine lié à la commutation de circuit (ou « CS Domain » en anglais), des éléments de réseau de type 3G-MSC ( où 3G est utilisé pour «3^{rd} Génération » et MSC est utilisé pour « Mobile Switching center ») et, pour le domaine lié à la commutation de paquet (ou « CS Domain » en anglais), des éléments de réseau de type 3G-SGSN ( où 3G est utilisé pour « 3^{rd} Génération » et SGSN est utilisé pour «Serving GPRS Support Node »).

On rappelle en outre que d'une manière générale, dans ces systèmes, des mécanismes de changement de cellule sont prévus, permettant de maintenir une connexion lorsque l'utilisateur passe d'une zone couverte par une cellule à une zone couverte par une autre cellule. D'une manière générale, le procesus de changement de cellule se décompose en deux étapes : une étape de préparation ou décision (au cours de laquelle il est décidé si un changement de cellule est possible et souhaitable, selon différents critères ou causes, et si oui vers quelle cellule, ou cellule cible, il devrait être effectué) et une étape d'exécution (ou commutation vers la cellule cible sélectionnée).

Dans le cas de connexion circuit, un tel changement de cellule correspond à un transfert inter-cellulaire ou « handover ». Dans ce cas, une décision de « handover » est prise par le réseau, généralement sur la base de résultats de mesures radio reportés au réseau par le terminal mobile (cette technique étant aussi appelée transfert inter-cellulaire assisté par le mobile, ou « MAHO », pour "Mobile Assisted Hand-Over" en anglais) et de tout autre critère (tel que par exemple la charge de trafic, ...etc.), et des ressources sont réservées à l'avance, par le réseau, dans la cellule cible, avant d'effectuer une commutation vers cette cellule cible.

Dans le cas de connexion paquet, un tel changement de cellule correspond à une re-sélection de cellule. On distingue généralement plusieurs modes de contrôle de resélection de cellule, correspondant à des degrés d'autonomie décroissants du terminal mobile, ou, ce qui revient au même, à des degrés de contrôle croissants par le réseau. Par exemple, dans le cas du GPRS, ces différents modes de contrôle incluent des modes de contrôle dits NC0 et NC1 correspondant à un mode de resélection de cellule contrôlé par le terminal mobile, et un mode de contrôle dit NC2 correspondant à un mode de resélection de cellule contrôlé par le réseau. Par ailleurs, la technique de re-sélection de cellule utilisée dans le cas de connexion paquet ne nécessite pas une réservation de ressources à l'avance dans la cellule cible ; au contraire, le terminal requiert lui-même des ressources dans la cellule cible en accédant normalement, en mode paquet, à la cellule cible re-sélectionnée suivant l'un ou l'autre de ces modes de contrôle.

D'un point de vue architecture de système, on distingue aussi différents types de changements de cellule, notamment suivant que la cellule initiale et la cellule cible utilisent ou non une même technologie d'accès radio, telle que 2G ou 3G. Le cas de cellule initiale et de cellule cible utilisant des technologies d'accès radio différentes est aussi appelé changement de cellule inter-technologie d'accès radio (ou inter-RAT, pour « inter Radio Access Technology » en anglais). Notamment des mécanismes de « handover », ou de resélection de cellule ordonnée par le réseau, de 2G vers 3G, sont prévus.

L'invention suggère, notamment, dans le cas où une connexion circuit (respectivement paquet) est établie pour un terminal bi-mode 2G/3G (tel que notamment un terminal UMTS/GSM-GPRS, noté aussi UE/MS) dans une cellule 2G (telle que notamment une cellule GSM-GPRS) et où une connexion paquet (respectivement circuit) est simultanément requise pour le même terminal, de déterminer si un changement de cellule est possible vers une cellule 3G (telle que notamment une cellule UMTS) et si oui d'effectuer un tel changement de cellule, afin de permettre les deux connexions simultanément dans une cellule 3G.

En d'autres termes, un des aspects de l'invention réside dans l'introduction d'une nouvelle cause de changement de cellule, notamment une nouvelle cause de « handover », ou une nouvelle cause de changement de cellule ordonné par le réseau, de 2G vers 3G.

L'invention s'applique aussi bien au cas de changement de cellule contrôlé par le réseau (assisté ou non par le terminal) qu'au cas de changement de cellule contrôlé par le terminal (assisté ou non par le réseau).

En outre, l'invention s'applique aussi bien au cas d'un terminal déjà engagé dans une connexion circuit, et souhaitant engager simultanément une connexion paquet, qu'au cas d'un terminal déjà engagé dans une connexion paquet, et souhaitant engager simultanément une connexion circuit.

En outre, l'invention s'applique aussi bien au cas où la requête de connexion simultanément à une connexion déjà établie est à l'initiative du terminal (ou « Mobile Originating » en anglais) qu'au cas où elle n'est pas à l'initiative du terminal (ou « Mobile Terminating » en anglais).

En outre, dans le cas où la requête de connexion simultanément à une connexion déjà établie est à l'initiative du terminal, l'invention suggère, notamment, d'autoriser le terminal à indiquer au réseau qu'il souhaite engager une connexion paquet alors qu'il est déjà engagé dans une connexion circuit, ou inversement. Sur la base d'une telle indication, le réseau peut alors décider si un changement de cellule vers une cellule 3G est possible et souhaitable, et si oui, effectuer un tel changement de cellule, afin de permettre les deux connexions circuit et paquet simultanément dans une cellule 3G.

En outre, la présente invention suggère différentes méthodes pour une telle signalisation, suivant la version de la norme applicable, en l'occurrence suivant qu'il s'agit de futures versions (3GPP R6 et suivantes) ou de la version actuelle (3GPP R99).

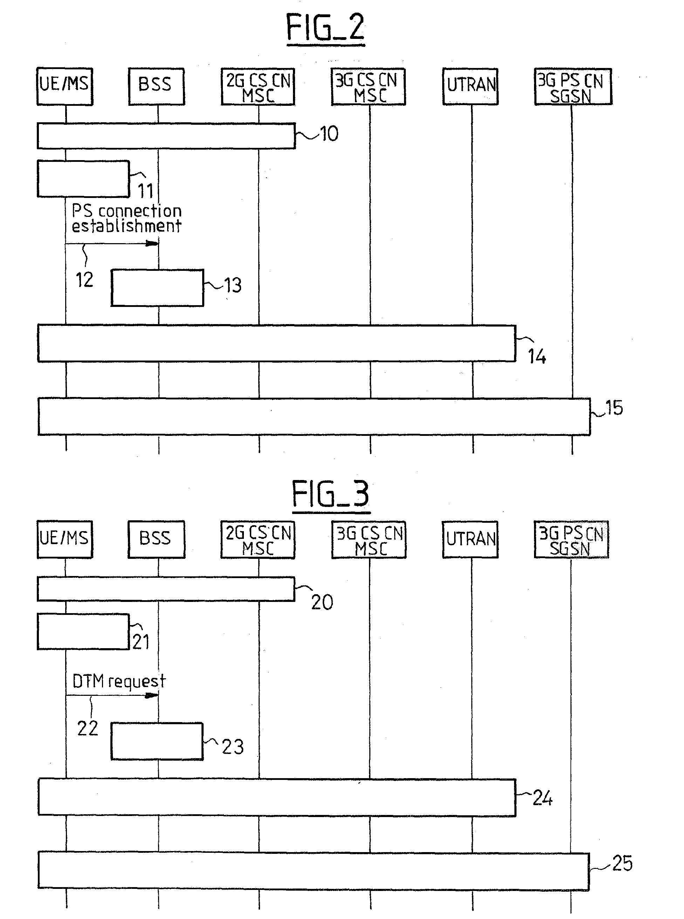

On décrit maintenant, en relation avec la figure 2, un premier exemple de réalisation, correspondant au cas d'un terminal UE/MS déjà engagé dans une connexion circuit et souhaitant engager une connexion paquet, et au cas de futures versions de la norme.

Sur la figure 2, une étape notée 10 est destinée à illustrer une étape initiale dans laquelle un terminal UE/MS est engagé dans une connexion circuit avec un réseau GSM-GPRS. On rappelle que dans une connexion circuit, le terminal a un lien de signalisation avec le BSS, par l'intermédiaire d'une connexion appelée aussi connexion RR (où RR est utilisé pour « Radio Resource ») et un lien de signalisation avec un élément de réseau coeur, ou 2G-MSC, par l'intermédiaire d'une connexion appelée aussi connexion MM ou GMM, où (G)MM est utilisé pour « (GPRS) Mobility Management»).

Dans une étape 11, une décision de requérir une connexion paquet est prise au niveau du terminal UE/MS (soit par l'utilisateur lui-même, soit par l'application).

L'UE/MS peut alors signaler au réseau GSM/GPRS (BSS ou 2G-MSC) qu'il souhaite établir une connexion paquet. Il pourrait être plus avantageux de le signaler au BSS car le BSS a une meilleure vue (notamment grâce à des mesures radio qui lui sont reportées par l'UE/MS) pour décider si un changement de cellule vers l'UMTS est possible et souhaitable; cependant le cas de signalisation au CN ne devrait pas être exclu.

Ainsi, lorsque l'UE/MS est déjà engagé dans une connexion circuit, si l'établissement d'une connexion paquet est requis, l'UE/MS envoie au réseau (BSS ou MSC), via le lien de signalisation correspondant (lien de signalisation RR ou lien de signalisation MM), un message noté ici « PS Connection Establishment Request » destiné à indiquer le besoin d'établir une connexion paquet, comme illustré par une étape 12, à titre d'exemple pour le cas de signalisation au BSS.

Dans une étape 23, la réception de ce message par le réseau (à titre d'exemple par le BSS dans l'exemple de la figure 2) déclenche un processus de décision de « handover » vers l'UTRAN et de sélection de cellule cible UMTS. Un tel processus peut lui-même inclure tout ou partie des étapes suivantes :
- le réseau vérifie si le terminal a les capacités requises pour accéder à une cellule de troisième génération (ou en d'autres termes si le terminal est bi-mode 2G/3G),
- le réseau vérifie si un tel « handover » est possible et souhaitable, sur la base de mesures radio préalablement reportées au réseau pour des cellules UMTS, et éventuellement sur la base d'autres critères,
- sur la base de telles mesures radio, le réseau peut sélectionner une cellule cible UMTS. Si aucune mesure radio n'est disponible, le réseau peut par exemple sélectionner une cellule cible UMTS définie par O&M (pour « Operation & Maintenance » en anglais), ou requérir de l'UE/MS des mesures radio sur des cellules UMTS.

Si à l'issue de l'étape 13 le réseau GSM-GPRS décide qu'un « handover » vers l'UTRAN est possible et souhaitable, l'étape suivante est l'exécution de ce « handover », notée 14. Cette étape peut être effectuée de manière habituelle, et par conséquent non re-décrite ici de manière détaillée. On rappelle simplement que, suivant le processus de « handover » inter-système de 2G vers 3G, tel que spécifié dans la norme GERAN/3GPP, le réseau GSM-GPRS commence par réserver des ressources dans la cellule cible UMTS. Si des ressources sont disponibles pour ce « handover » dans la cellule cible UMTS, le réseau GSM-GPRS en est informé et requiert alors à l'UE/MS d'effectuer ce « handover ».

L'invention propose en outre, au cours de cette étape d'exécution de « handover », que le réseau GSM-GPRS puisse indiquer au réseau UMTS, notamment dans un message de préparation de « handover », que l'UE souhaite établir simultanément une connexion paquet dans la cellule cible. Ceci permettrait au réseau UMTS de déclencher l'envoi à l'UE d'un message de « paging » (ou recherche d'abonné), et éviterait alors à l'UE de devoir mémoriser sa requête de connexion PS pour la renouveler une fois le transfert vers la cellule cible effectué.

L'étape finale illustrée sur la figure 2 est une étape notée 15 d'établissement de connexion paquet simultanément à la connexion circuit, dans la cellule cible UMTS. Comme indiqué ci-dessus, une possibilité est donc que cette étape soit initiée par le réseau UMTS, cette possibilité reposant sur l'envoi d'une signalisation appropriée, par le réseau GSM-GPRS, au réseau UMTS. Une autre possibilité est donc que cette étape soit initiée par l'UE/MS, cette possibilité reposant sur la répétition de la requête de connexion paquet, par l'utilisateur lui-même, ou par l'application. Une fois initiée (de l'une ou l'autre de ces manières) l'étape 15 peut être effectuée de manière habituelle, et par conséquent non re-décrite ici de manière détaillée.

On notera que le message « PS Connection Establishment Request » transmis du terminal vers le réseau dans l'étape 12 n'existe pas dans la version actuelle de la norme. Un des différents aspects de l'invention réside dans l'introduction d'une telle nouvelle signalisation. Un autre aspect de l'invention réside dans l'introduction d'une nouvelle cause de « handover » inter-système vers l'UTRAN, comme indiqué précédemment.

On décrit maintenant de manière plus détaillée, en relation avec la figure 3, un deuxième exemple de réalisation, correspondant au cas de terminal UE/MS déjà engagé dans une connexion circuit et souhaitant engager une connexion paquet, et au cas de version actuelle de la norme.

Dans ce cas, un autre aspect de l'invention réside dans la possibilité de déclencher un « handover » vers l'UMTS même avec un terminal UE/MS conforme à la version actuelle (ou version R99) de la norme, c'est-à-dire ne supportant pas la nouvelle signalisation introduite en relation avec l'exemple de la figure 2, comme il va maintenant être décrit.

L'idée consiste en une fausse indication, par le réseau, de support de la fonctionnalité DTM. On rappelle que, pour un terminal DTM engagé dans une connexion circuit, si la cellule serveuse indique qu'elle supporte la fonctionnalité DTM, alors le terminal peut requérir l'établisssement d'une connexion paquet simultanément à la connexion circuit établie, en envoyant au BSS une requête de fonctionnement selon le mode DTM, ou message « DTM Request », sur le lien de signalisation RR associé à cette connexion CS. La plupart des terminaux DTM devraient être des terminaux bi-mode 2G/3G ; ainsi, aussitôt qu'une requête « DTM Request » serait envoyée par un terminal 2G/3G , le BSS pourrait déclencher un handover inter-système, de 2G vers 3G. Pour les terminaux DTM qui ne sont pas bi-mode 2G/3G, le BSS ne répondrait pas à cette requête « DTM Request ». Des moyens pourraient alors être prévus pour éviter dans ce cas qu'une telle requête « DTM Request » ne soit répétée indéfiniment, afin de ne pas gaspiller des ressources de signalisation.

La procédé ainsi proposé ne s'applique donc pas:
- à des terminaux MS qui supportent la fonctionnalité DTM mais qui ne sont pas bi-mode UMTS/GSM-GPRS,
- à des terminaux UE/MS qui ne supportent pas la fonctionnalité DTM.

Plus précisément, un exemple de procédé pourrait comporter les étapes illustrées sur la figure 3.

Dans une étape 20, une connexion circuit est en cours pour un terminal UE/MS supportant la fonctionnalité DTM, dans une cellule indiquant faussement qu'elle supporte le DTM. Une telle fausse indication de support du DTM pourrait ainsi être diffusée par le BSS dans chaque cellule GSM-GPRS située au voisinage d'au moins une cellule UMTS.

Dans une étape 21, une décision est prise au niveau du terminal UE/MS d'établir simultanément une connexion paquet.

Dans une étape 22, le terminal UE/MS envoie alors au BSS un message « DTM Request ». Selon la spécification 3GPP TS 04.18, simultanément à l'envoi d'un message « DTM Request » le terminal déclenche un processus de temporisation (temporisation notée T3148 dans cette spécification).

Dans une étape 23, le BSS, qui a connaissance du fait que le terminal est un terminal 2G/3G, déclenche un processus de décision de « handover » vers l'UTRAN et de sélection de cellule cible UMTS ; ce processus peut être similaire à celui décrit en relation avec l'étape 13 de la figure 2.

Si à l'issue de l'étape 23, le réseau GSM-GPRS décide qu'un « handover » vers l'UTRAN est possible et souhaitable, l'étape suivante est l'exécution de ce « handover », notée 24. Cette étape peut être effectuée de manière habituelle, et par conséquent non re-décrite ici de manière détaillée. On rappelle simplement que, suivant le processus de « handover » inter-système de 2G vers 3G, tel que spécifié dans la norme GERAN/3GPP, cette étape inclut notamment l'envoi au terminal d'un message « Inter-System to UTRAN Handover Command », avant l'expiration de ladite temporisation. A la réception de ce message, le terminal stoppe ledit processus de temporisation et abandonne ainsi la procédure d'accès en mode paquet initiée dans la cellule 2G, pour obéir à la commande de « handover » vers l'UTRAN.

L'étape finale illustrée sur la figure 3 est une étape d'établissement de connexion paquet simultanément à la connexion circuit, dans la cellule cible UMTS. Cette étape est notée 25 et peut être similaire à l'étape 15 de la figure 2.

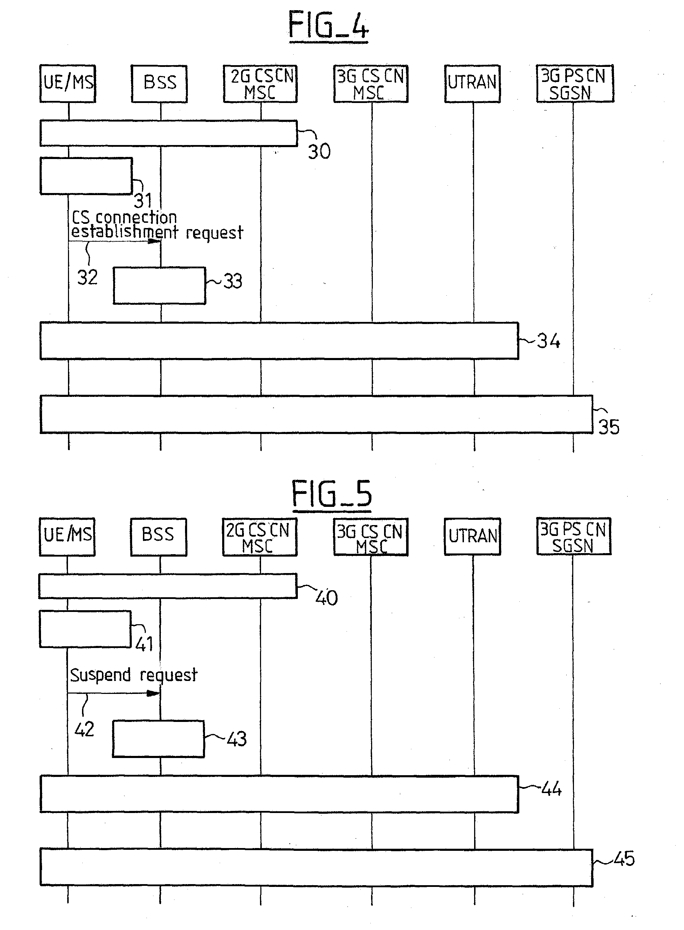

On décrit maintenant de manière plus détaillée, en relation avec la figure 4, un troisième exemple de réalisation, correspondant au cas de terminal UE/MS déjà engagé dans une connexion paquet et souhaitant engager une connexion circuit, et au cas de futures versions de la norme.

Une étape notée 30 correspond à une étape initiale dans laquelle un terminal UE/MS est engagé dans une connexion paquet avec un réseau GSM-GPRS. On rappelle que dans une telle connexion paquet, le terminal a un lien de signalisation avec le BSS, par l'intermédiaire d'une connexion temporaire en mode paquet ou TBF (« Temporary Block Flow ») et un lien de signalisation avec un élément de réseau coeur, ou 2G-SGSN, par l'intermédiaire d'un contexte de gestion de mobilité ou GMM (« GMM context »).

Dans une étape 31, une décision est prise au niveau du terminal (soit par l'utilisateur lui-même, soit par l'application) de requérir une connexion circuit.

L'UE/MS peut alors signaler au réseau GSM/GPRS (soit au BSS, soit au 2G-SGSN), qu'il souhaite établir une connexion circuit. Il pourrait être plus avantageux de le signaler au BSS car le BSS a une meilleure vue (notamment grâce à des mesures radio qui lui sont reportées par l'UE/MS) pour décider si un changement de cellule vers l'UMTS est possible et souhaitable; cependant le cas de signalisation au CN ne devrait pas être exclu.

Ainsi, lorsque l'UE/MS est déjà engagé dans une connexion paquet, si l'utilisateur requiert l'établissement d'une connexion circuit, l'UE/MS envoie au réseau (BSS ou 2G-SGSN), via le lien de signalisation correspondant (lien de signalisation TBF ou lien de signalisation GMM), un message destiné à indiquer le besoin d'établir une connexion CS, message noté ici « CS Connection Establishment Request »), comme illustré dans une étape 32, à titre d'exemple pour le cas de signalisation au BSS.

Dans une étape 33, la réception de ce message par le réseau (BSS dans l'exemple illustré, ou plus généralement BSS/2G-SGSN) déclenche un processus de décision de changement de cellule ordonné par le réseau GSM-GPRS vers l'UTRAN et de sélection de cellule cible UMTS; le mode de resélection de cellule est alors le mode NC2, et ce processus de décision et de sélection de cellule cible peut mettre en oeuvre des critères similaires à ceux décrits en relation avec l'étape 13 de la figure 2 pour le cas de « handover ».

Si à l'issue de l'étape 33, le réseau GSM-GPRS décide qu'un changement de cellule ordonné par le réseau vers l'UTRAN est possible et souhaitable, l'étape suivante est l'exécution de ce ce changement de cellule ordonné par le réseau, notée 34. Cette étape peut être effectuée de manière habituelle, et par conséquent non re-décrite ici de manière détaillée.

L'invention propose en outre, au cours de cette étape d'exécution de changement de cellule, que le réseau GSM-GPRS puisse indiquer au réseau UMTS, notamment dans un message de préparation de changement de cellule, que l'UE souhaite établir simultanément une connexion circuit dans la cellule cible. Ceci permettrait au réseau UMTS de déclencher l'envoi à l'UE d'un message de « paging » (ou recherche d'abonné), et éviterait alors à l'UE de devoir mémoriser sa requête de connexion circuit pour la renouveler une fois la commutation vers la cellule cible effectuée.

L'étape finale illustrée sur la figure 4 est une étape, notée 35, d'établissement de connexions simultanées circuit et paquet dans la cellule cible UMTS. Comme indiqué ci-dessus, une possibilité est donc que cette étape soit initiée par le réseau UMTS, cette possibilité reposant sur l'envoi d'une signalisation appropriée, par le réseau GSM-GPRS, au réseau UMTS. Une autre possibilité est donc que cette étape soit initiée par l'UE/MS, cette possibilité reposant sur la répétition de requête de connexion circuit par l'utilisateur lui-même, ou par l'application. Une fois initiée (de l'une ou l'autre de ces manières) l'étape 35 peut être effectuée de manière habituelle, et par conséquent non re-décrite ici de manière détaillée.

On décrit maintenant de manière plus détaillée, en relation avec la figure 5, un quatrième exemple de réalisation, correspondant au cas de terminal UE/MS déjà engagé dans une connexion paquet et souhaitant engager une connexion circuit, et au cas de version actuelle de la norme.

Dans ce cas, un autre aspect de l'invention réside dans la possibilité de déclencher un changement de cellule vers l'UTRAN même avec un terminal UE/MS conforme à la version actuelle (ou version R99) de la norme, c'est-à-dire ne supportant pas la nouvelle signalisation introduite en relation avec l'exemple de la figure 4.

L'idée est que le message de suspension de session paquet (ou message « Suspend Request ») habituellement transmis par le terminal (MS) au réseau (2G-SGSN) dans le cas où le terminal et/ou la cellule via laquelle le terminal accède au réseau ne supportent pas simultanément des services circuit et des services paquet, peut être utilisé pour indiquer au réseau qu'une connexion circuit est requise simultanément à une connexion paquet. Sur la base de cette indication, le réseau peut alors décider si un changement de cellule vers une cellule 3G est possible est souhaitable, afin d'établir les deux connexions simultanément dans une cellule 3G.

Plus précisément, un exemple de procédé pourrait être celui illustré sur la figure 5, comportant les étapes suivantes :
- dans une étape 40, une connexion paquet est en cours pour un terminal UE/MS dans une cellule GSM-GPRS,
- dans une étape 41, une décision est prise au niveau du terminal d'établir simultanément une connexion circuit,
- dans une étape 42, le terminal UE/MS envoie alors au 2G-SGSN un message « Suspend Request »,
- dans une étape 43, le BSS décode le message « Suspend Request » et un processus de décision de changement de cellule ordonné par le réseau vers l'UTRAN peut alors être mis en oeuvre, par exemple d'une manière similaire à ce qui a été décrit pour l'étape 33 de la figure 4,
- si à l'issue de l'étape 43 une décision de changement de cellule ordonné par le réseau vers l'UTRAN est prise, alors une étape 44 est mise en oeuvre, correspondant à l'exécution de ce changement de cellule ordonné par le réseau, par exemple d'une manière similaire à ce qui a été décrit pour l'étape 34 de la figure 4,
- une étape finale notée 45 correspond à une étape d'établissement de connexion circuit simultanément à la connexion paquet, dans la cellule cible UMTS (cette étape pouvant être similaire à l'étape 35 de la figure 4).

La présente invention a également pour objet un terminal mobile pour système de radiocommunications mobiles, un équipement de réseau d'accès radio pour système de radiocommunications mobiles, et un équipement de réseau coeur pour système de radiocommunications mobiles, comportant des moyens pour mettre en oeuvre un tel procédé.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour l'accès simultané à des services circuit et à des services paquet, dans un système cellulaire de radiocommunications mobiles comportant des cellules de deuxième génération et des cellules de troisième génération, procédé dans lequel, dans le cas où une connexion paquet, respectivement circuit, est requise pour un terminal ayant une connexion circuit, respectivement paquet, établie dans une cellule de deuxième génération, il est déterminé si un changement de cellule vers une cellule de troisième génération est possible, et si oui ledit changement de cellule est effectué, afin de permettre lesdites connexions circuit et paquet simultanément dans une cellule de troisième génération.

2. Procédé selon la revendication 1, dans lequel le réseau détermine si ledit changement de cellule est possible.

3. Procédé selon l'une des revendications 1 ou 2, dans lequel, dans le cas où ladite connexion établie dans une cellule de deuxième génération est une connexion circuit, ledit changement de cellule correspond à un transfert inter-cellulaire ou « handover ».

4. Procédé selon l'une des revendications 1 ou 2, dans lequel, dans le cas où ladite connexion établie dans une cellule de deuxième génération est une connexion paquet, ledit changement de cellule correspond à un changement de cellule ordonné par le réseau.

5. Procédé selon l'une des revendications 1 à 4, dans lequel le terminal signale au réseau qu'une connexion paquet, respectivement circuit, est requise simultanément à une connexion circuit, respectivement paquet, déjà établie, et, sur réception de ladite signalisation, le réseau détermine si ledit changement de cellule est possible.

6. Procédé selon la revendication 5, dans lequel le terminal signale au réseau qu'une connexion paquet est requise simultanément à une connexion circuit déjà établie, en transmettant au réseau une requête de fonctionnement selon le mode DTM (« Dual Transfer Mode »).

7. Procédé selon la revendication 6, dans lequel :
- une cellule de deuxième génération ne supportant simultanément des services circuit et des services paquet signale faussement aux terminaux mobiles dans cette cellule qu'elle supporte simultanément des services circuit et des services paquet,
- un terminal mobile supportant simultanément des services circuit et des services paquet, et ayant une connexion circuit établie dans cette cellule, signale au réseau qu'une connexion paquet est requise, en transmettant au réseau une requête de fonctionnement selon le mode DTM (« Dual Transfer Mode »),
- sur réception de ladite signalisation, le réseau détermine si ledit changement de cellule est possible.

8. Procédé selon la revendication 5, dans lequel le terminal signale au réseau qu'une connexion circuit est requise simultanément à une connexion paquet déjà établie, en transmettant au réseau une requête de suspension de session paquet.

9. Procédé selon l'une des revendications 1 à 8, dans lequel, une fois ledit changement de cellule effectué, un établissement de connexion dans ladite cellule de troisième génération est initié automatiquement par l'envoi au terminal, par le réseau, d'un message de « paging ».

10. Procédé selon la revendication 9, dans lequel, lors de l'exécution dudit changement de cellule, des informations nécessaires pour une telle initiation automatique d'établissement de connexion par le réseau sont transmises par ladite cellule de deuxième génération vers ladite cellule de troisième génération.

11. Procédé selon l'une des revendications 1 à 8, dans lequel, une fois ledit changement de cellule effectué, un établissement de connexion dans ladite cellule de troisième génération est initié par le terminal.

12. Terminal mobile pour système de radiocommunications mobiles, comportant des moyens pour mettre en oeuvre un procédé selon l'une des revendications 1 à 11.

13. Equipement de réseau d'accès radio pour système de radiocommunications mobiles, comportant des moyens pour mettre en oeuvre un procédé selon l'une des revendications 1 à 11.

14. Equipement de réseau coeur pour système de radiocommunications mobiles, comportant des moyens pour mettre en oeuvre un procédé selon l'une des revendications 1 à 11.
